**Europäisches Patentamt**

**European Patent Office**

**Office européen des brevets**

(19)

(11) Publication number: **0 208 224**
**A2**

(12) # EUROPEAN PATENT APPLICATION

(21) Application number: **86108882.1**

(22) Date of filing: **31.03.83**

(51) Int. Cl.⁴: **F 02 P 5/04**

(30) Priority: **31.03.82 US 363932**
**13.07.82 US 397870**

(43) Date of publication of application:
**14.01.87 Bulletin 87/3**

(84) Designated Contracting States:
**AT BE CH DE FR GB IT LI LU NL SE**

⅞¼Publication number of the earlier application
in accordance with Art. 76 EPC: **0 091 289**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al,**
**Withers & Rogers 4 Dyer's Buildings Holborn**
**London EC1N 2JT(GB)**

(54) **An ignition controlling means for a linear or rotary type of engine.**

(57) An ignition controlling means for a linear or rotary engine comprises:

means to sense the vacuum in the engine intake and convert the so-sensed value of vacuum into a corresponding analog or digital signal;

means to sense the engine speed and convert the so-sensed value of engine speed into a corresponding analog or digital signal;

means for storing ignition timing correction values; and

- means for comparing the vacuum and speed signals with the stored correction values and generating a servo-driving signal for adjustment of the ignition timing of the engine.

EP 0 208 224 A2

./...

Fig.16

# AN IGNITION CONTROLLING MEANS FOR A LINEAR OR ROTARY
## TYPE OF ENGINE

This invention relates to an ignition controlling means particularly for use with a linear or rotary type of engine including an air exchanging chamber.

An engine for which the controlling means is particularly suitable comprises a first member having a first plane or arcuate surface in sealing contact with a complementary surface and slidable relative to the first surface, a plurality of working chambers opening into the first surface and disposed in pairs of parallel rows with each row of each pair disposed in the line of relative sliding of the two surfaces, characterised in that one row of chambers of one row of a pair of frows forms a series of intake and compression chambers and a parallel row of chambers of the said pair forms a series of explosion and exhaust chambers, the chambers in one row alternating with the chambers in the other parallel row of a pair of rows and each chamber of one row being connectable to an adjacent chamber of the other row of a pair of rows during a part of the relative sliding travel of the two surfaces through an air exchanging recess formed in the complementary surface;

in that the complementary surface includes:

an inlet port and an exhaust port connectable over part of the relative sliding travel of the two surfaces with corresponding intake and exhaust chambers in the first surface;

in that two rows of sliding valves are slidable into recesses in the complementary surface each of which sliding valves during a part of the relative sliding travel of the two surfaces project into an appropriate chamber to sealingly divide the chamber into two portions, and in that the engine includes:

means for igniting or injecting fuel associated with each air exchanging chamber;

whereby during relative sliding motion of the two surfaces an otto cycle is accomplished in which:

as a valve traverses an intake/compression chamber, air or an air/fuel mixture is drawn through an inlet port into that part of the cylinder behind the sliding valve, a charge of air or air/fuel mixture drawn into the cylinder in the previous cycle is compressed in front of the sliding valve and then transferred through the said recess into the explosion/exhaust chamber;

fuel is injected and ignited or the fuel/air mixture is ignited;

the ignited charge expands behind the valve traversing the explosion/exhaust cylinder thereby driving the one sliding surface relative to the other; and

any ignited charge from the previous cycle being swept out in front of the valve through the exhaust port, and further characterised in that:

each chamber of an explosion/exhaust cylinder includes at its trailing end means for by-passing the valve to permit the ignited charge to exhaust through the exhaust port.

In order to improve the ignition control and particularly control of ignition advance there is provided, according to one aspect of the invention, a servo-driving ignition advance means which is adjustable by means of a stepper motor or a solenoid may be provided. This is actuated by an analog or digital comparator or a correction output generated by a difference between the sensed value of engine rotation speed and the intake vacuum and a pre-stored best correction value. The controoling means according to the invention represents an improvement on the well-known centrifugal block type of ignition controller and the vacuum type of lead-time ignitors which cannot adequately match the lead-time ignition curve required by the engine.

The present invention also includes an ignition controlling means for a linear or rotary engine comprising:

means to sens the vacuum in the engine intake and convert the so-sensed value of vacuum into a corresponding analog or digital signal;

means to sense the engine speed and convert the so-sensed value of engine speed into a corresponding analog or digital signal;

means for storing ignition timing correction values; and

means for comparing the vacuum and speed signals with the stored correction values and generating a servo-driving signal for adjustment of the ignition timing of the engine.

The invention will now be described by way of examble with reference to the embodiment shown in the accompanying drawings in which:

Figure 1 and 1-1 show general arrangement of an engine with known fuel, cooling, lubrication, and transmission systems.

Figure 2 shows in section embodiments of engine of drum-shaped rotation type or column-shaped type.

Figure 3 shows in section an embodiment of engine using two annular parts.

Figure 4 shows plan and sectional views of an embodiment of linear type engine including the cylinder set, air exchanging chambers, movable valves, and intake/exhaust ports.

air exchanging chambers, movable valves, and intake/
exhaust ports.

Fig. 5 shows the phase relation of the cylinder set
and the air exchanging chambers in a rotary type engine.

Fig. 6 shows the fuel gas flow in the cylinder
set through the movable valve and the air exchanging
chamber during movement of the sliding part.

Fig. 7 shows the operation sequence during movement
of the sliding part in a linear type of engine.

Fig. 8 shows in section and plan the exhaust
structure of engine, in which a slot is provided at the
end of cylinder so as to match during the next cycle with
the exhaust port on the corresponding surface.

Fig. 9 shows the movable valve in this invention
contacting the cylinder at a suitable angle to the direction of slide.

Fig. 10, 11 and 12 show an engine in which the
sliding valves are connected to a central crankshaft.

Fig. 13 shows the end of a sliding valve provided
with a sliding packing.

Fig. 14 shows an engine, in which the sliding valves
are connected to external crankshafts.

Fig. 15 shows a linear type engine, in which the
sliding valve in the fixed part is used for reciprocatingly driving a crank or other auxiliary means.

Fig. 16 shows a block diagram of an ignition means
to be adjusted with a servo-drive.

Fig. 17 shows a block diagram of an ignition
advancer to be adjusted with a linear solenoid that is
driven by a comparator between a preset analog transducer and an analog control means.

Fig. 18 shows the arrangement of a linear solenoid coupled to the adjustable portion of a distributor for adjustment of timing.

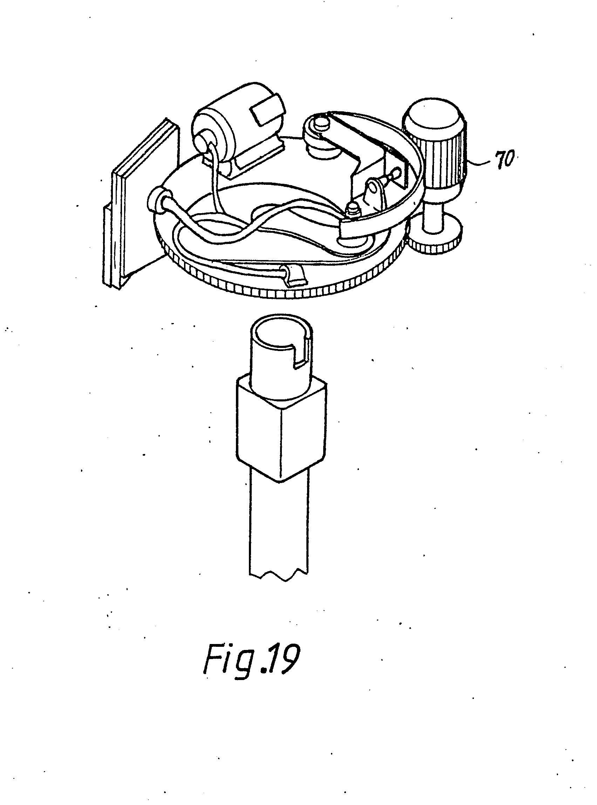

Fig. 19 shows the arrangement of a stepper motor coupled to the adjustable portion of the distributor for adjustment of timing.

Fig. 20 shows a block diagram of the advanced ignition adjustment of a solid state ignition means driven by a non-contact timing means and a controllable time-delay circuit, and also shows the advanced ignition operation of the engine at a constant speed during going down a slope.

Fig. 21 shows an embodiment of ignition adjustment using platinum contact points.

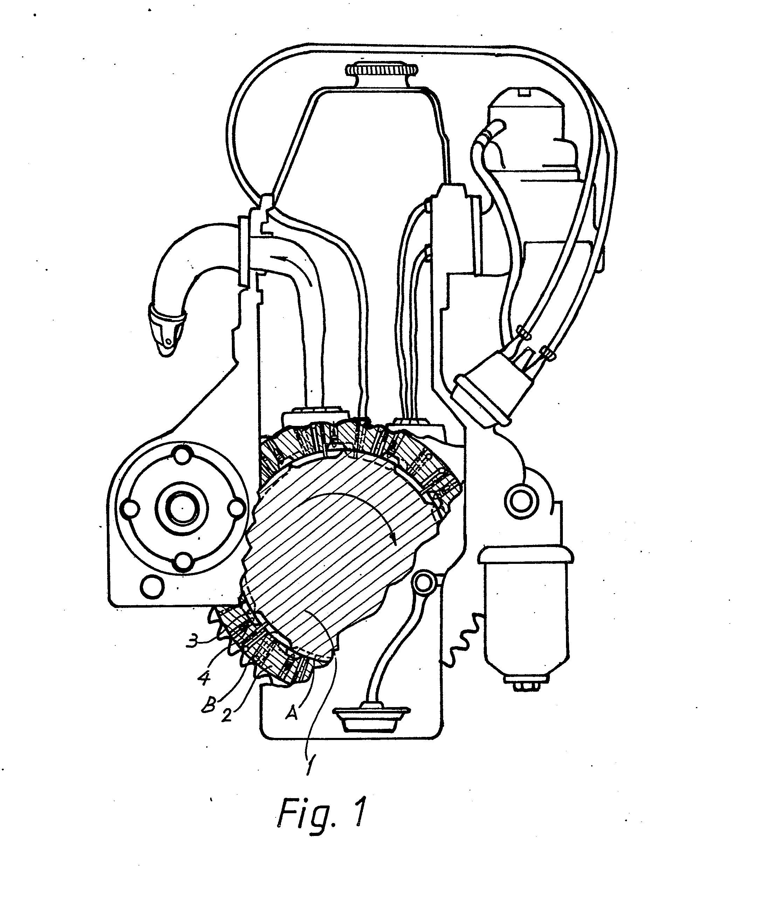

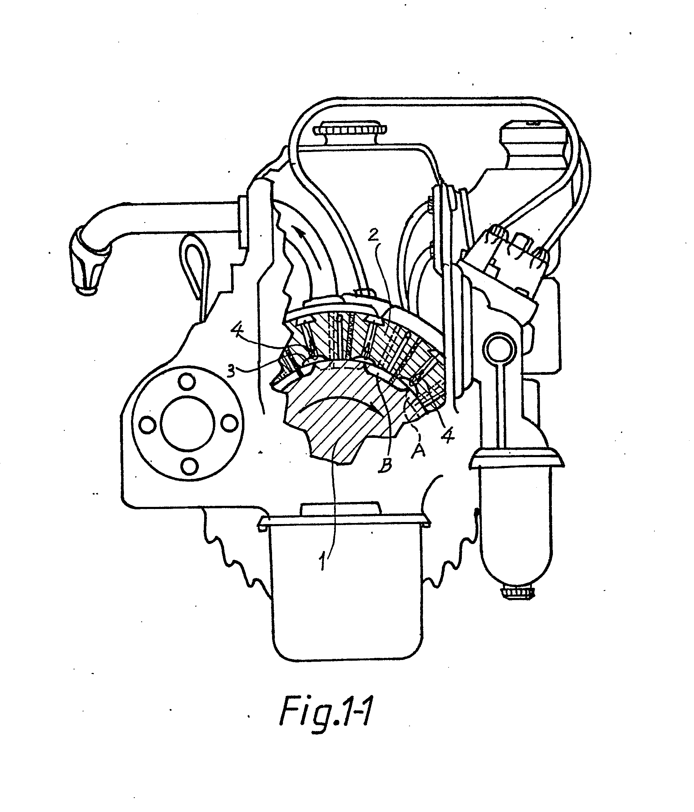

This invention provides a linear or rotary type of engine for cyclic operation with separate intake and explosion cylinders connected by an air exchanging chamber. In addition to having the conventional engine components, such as fuel system, cooling system, lubrication system, and transmission system as shown in Figs. 1 and 1-1, this novel engine can generate dynamic output by means of linear type or rotary type drive, the feature of which is that said linear type or rotary type of engine is provided with cylinders formed in a sliding surface.

In Figs. 1 and 1-1 is shown a rotary engine in which the sliding surfaces are between moving part (rotor) (1) and fixed part (stator) (2). Cylinders (A) for intake and compression and cylinders (B) for explosion and exhaust are connectable by air exchanging chambers (3) provided with spark plugs or injection nozzles (4).

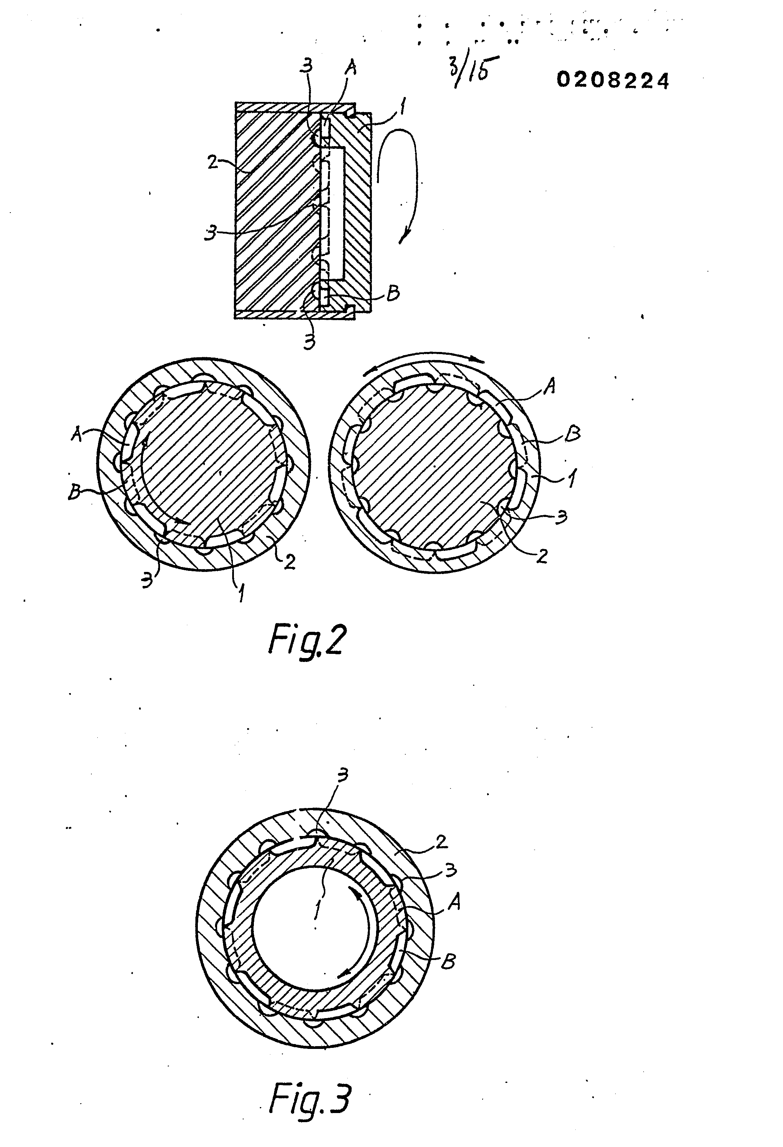

As shown in Fig. 2, said engine may be a type, in which either the inner part or the outer part is the rotor (1), and the other part is the stator (2); The two parts may both be designed as coaxial cylinders (as shown in Fig. 3) with their adjoining surfaces in close sliding contact. An oil film is present between the sliding surfaces to provide lubrication and a hermetic seal.

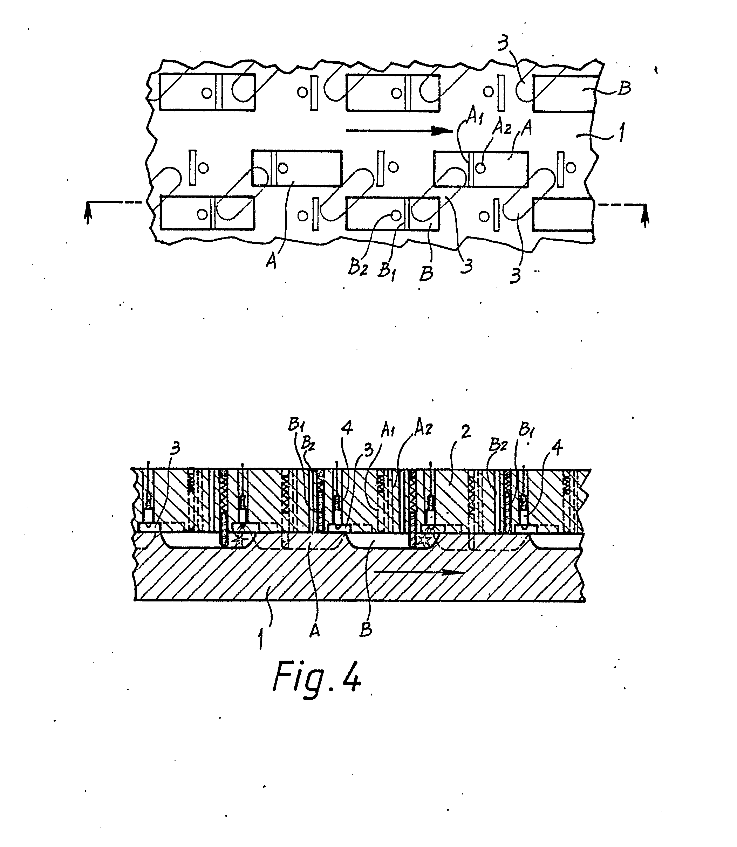

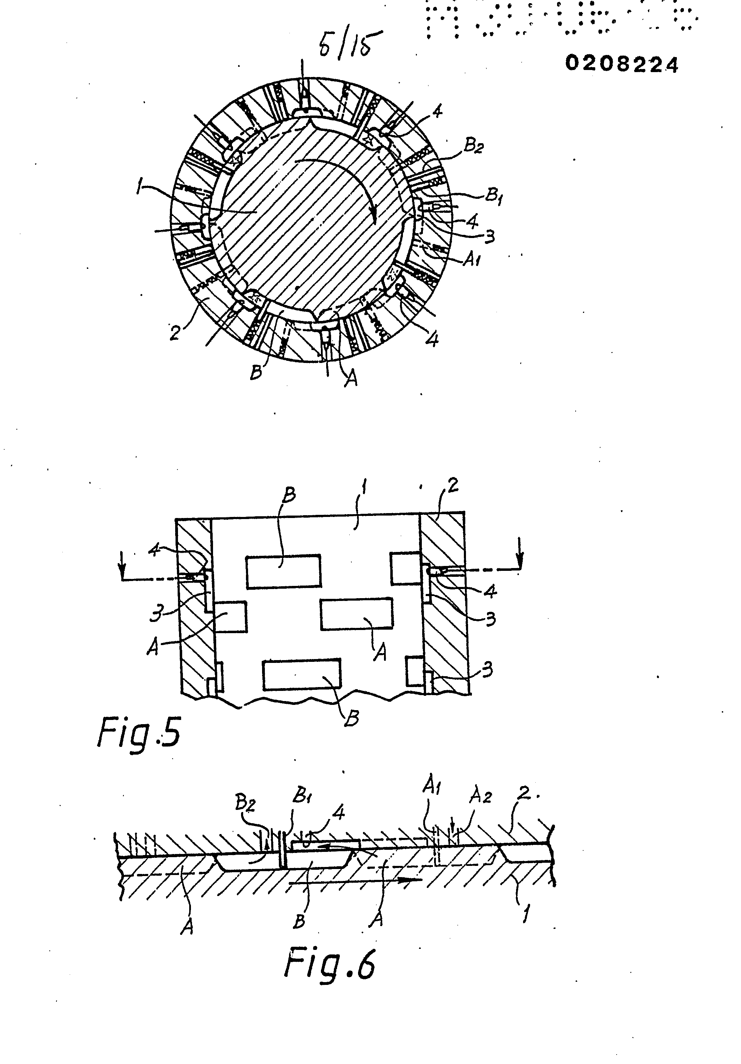

On one of said surfaces, one or more than one cylinder sets arranged in a given phase relation are used to perform Otto cycle comprising intake, compression, explosion, and exhaust so as to drive the sliding part (1) either linearly or rotating. As shown in Fig. 4 in relation to a linear engine and in Fig. 5 in relation to a rotary engine the cylinder set of said sliding part (1) comprises two rows of cylinder (A) (B), in which one row is the intake and compression cylinders (A), while the other row is the explosion and exhaust cylinders (B) which may be equal or un-equal to the length of the cylinder (A). A sectional view of said cylinders (A) (B) is shown in the Figs. 4 and 5 with their phase relation as shown in the plan views of Fig. 4 and 5 in which the cylinders (A) (B) of the two rows are arranged alternately but not overlapped.

The engines of Figs. 4 and 5 consist of a fixed part (2) and a sliding part (1). In said sliding part (1), a number of air exchanging chambers (3) each corresponding to a pair of cylinders (A) (B) in the two sets is provided across said cylinders (A) (B). The air exchanging chambers (3) are so arranged as to connect the two cylinders (A) (B) of the pair during the completion of compression stroke prior to the explosion stroke so as to let the compressed and atomized fuel enter the explosion cylinder (cylinder(B)) as shown in Fig. 6. The span between every air exchanging chambers (3) is the same as that between the cylinders (A) and (B). At a position inside the air exchanging chamber (3) and near said explosion and exhaust cylinder (B), a spark plug or an oil nozzle (4), depending on the fuel used, is installed in a recess in the fixed part (2). In a gasoline engine, a spark plug (4) will be used, while an oil nozzle is used for the diesel engine. Further, in said fixed part (2), a movable valve (A1), an intake port (A2), a movable valve (B1), and an exhaust port (B2) are provided opposite to the cylinder (A) and cylinder (B) respectively as shown in Figs. 4 and 5 Said movable valve (A1) and intake port (A2) are located after the air exchanging chamber (3) in the direction of movement of the moving part (1) and in the line of passage of the cylinder (A) row. The movable valve (A1) slides in a slot in fixed part (2) and is provided with a spring (5), by which the outer end of the valve is pressed into close contact with the bottom and the side surface of said cylinder (A). The sliding valve (A1) may be aligned at right angles or at a suitable other angle to the sliding part (1). When the sliding part (1) is in motion, air will be sucked into the compression cylinder (A) through intake port (A2).

The movable valve (B1) and the exhaust port (B2) are located forward of ———————————— the air exchange chamber (3) in the direction of movement of the moving part (1) and in the line of passage of the cylinder (B) row. The valves (B1) are sliding valves similar to valves (A1) and are pressed by a spring (5) into close contact with the bottom and side surface of the related explosion and exhaust cylinder (B) at a right angle or other suitable angle. The movable valves (A1,

B1) when extended into the respective cylinders seal that part of the cylinder on one side of the valve from that part of the cylinder on the other side of the valve. In this way, for example, they block the waste gas in explosion stroke in the cylinder (B) and exhaust it through exhaust port (B2) during the motion of the sliding part (1).

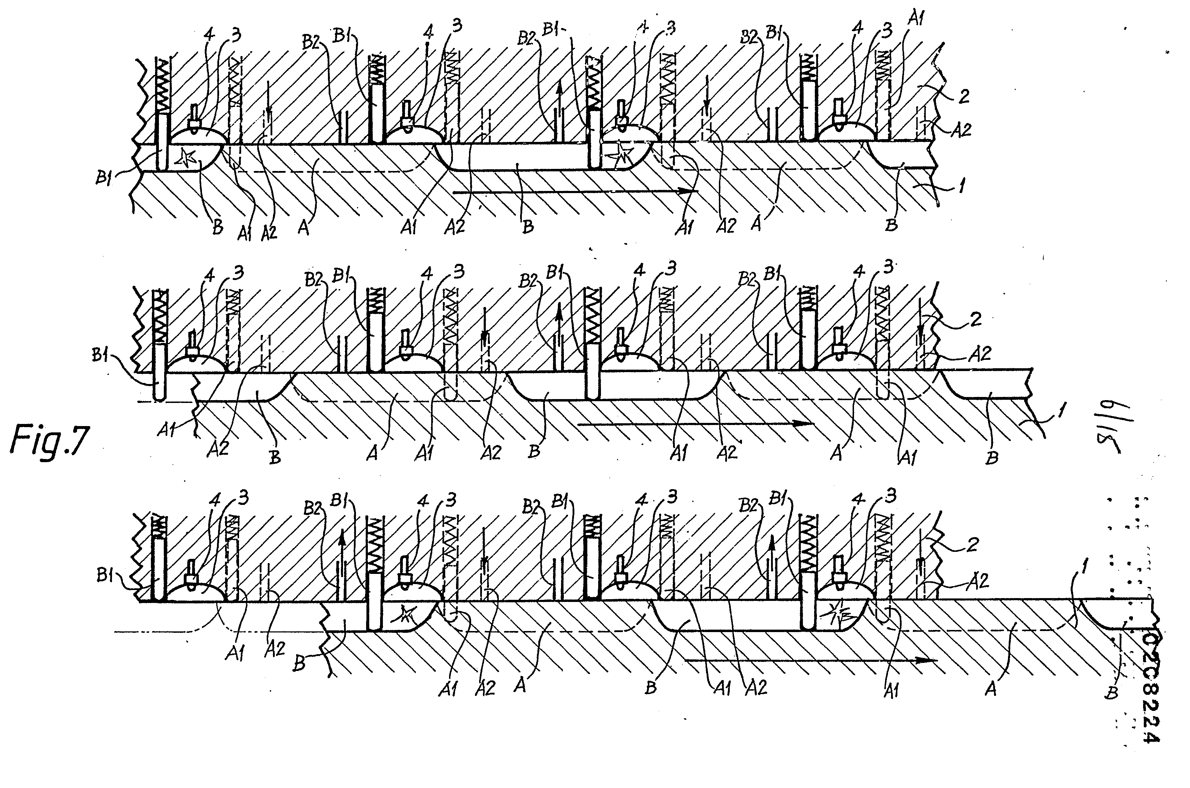

Referring to Fig. 7 when the sliding part (1) is driven by a starting motor or other means to slide or rotate to a direction indicated by the arrow, the cylinder (A) will first receive the movable valve (A1). There is also a movable valve (A1) between two cylinders (A) but that one is restricted into the fixed part (2). As cylinder (A) slides along, the space thereof that has slid over said movable valve (A1) is under low pressure and sucks air and fuel through the intake port (A2). As the cylinder (A) continues moving forwards, the air and fuel in that part of the cylinder (A) on the other side of the movable valve (A1) will be compressed. At the same time, movable valve (B1) will slide into cylinder (B). Now the air and fuel cylinder (A) will be compressed through the air exchanging chamber (3), into cylinder (B) under high pressure. As the sliding part (1) continuously moves forwards the air exchanging chamber (3) becomes disconnected from the intake and compression cylinder (A), and the spark plug (5) near the cylinder (B) will ignite the air/fuel mixture; the sliding part (1) continues to move forward being driven by means of the arcuate or oblique surface design at the leading end of the cylinder (B). The movable valve (B1) blocks off the waste gas generated during the preceding explosion in cylinder (B) and exhausts it through exhaust port (B2). After the sliding part (1), being driven by 0208224 the preceding compressed fuel explosion, reaches the aforesaid movable valve (A1) to cause said valve to retract into the fixed part (2), said cylinder (A) starts the next cycle letting the movable valve (A1) slide in so as to have cylinder (A) suck air/fuel mixture into that part forward of the movable valve (A1), and to compress on the other side of movable valve (A1) the fuel/ air sucked into the cylinder (A) during the preceding cycle. As before, the air/fuel mixture is passed into cylinder (B) through the air exchanging chamber (3); then, the spark plug (4) inside the air exchanging chamber (3) will ignite the air/fuel mixture for continuously driving the sliding part (1).

The sets of cylinders may be staggered to provide a more continuous driving force.

The aforesaid engine may be driven with diesel oil or other fuel by using oil nozzle instead of spark plug (4) and by suitable changing the compression ratio. When the sliding part (1) is moving, air will be sucked into the compression cylinder (A) via the intake port (A2). The air in said cylinder (A) will be compressed into the air exchanging chamber (3) and the cylinder (B) by means of the movable valve (A1) in next cycle. When the sliding part (1) has continued to move forwards to separate the air exchanging chamber (3) from the cylinder (A), the air in the cylinder (B) has been compressed to a high pressure and temperature. At that moment, ——————————— ——————————————— oil or other gas fuel is sprayed through a nozzle into the cylinder (B) to be exploded by the high pressure and high temperature and so continuously drive the sliding part (1).

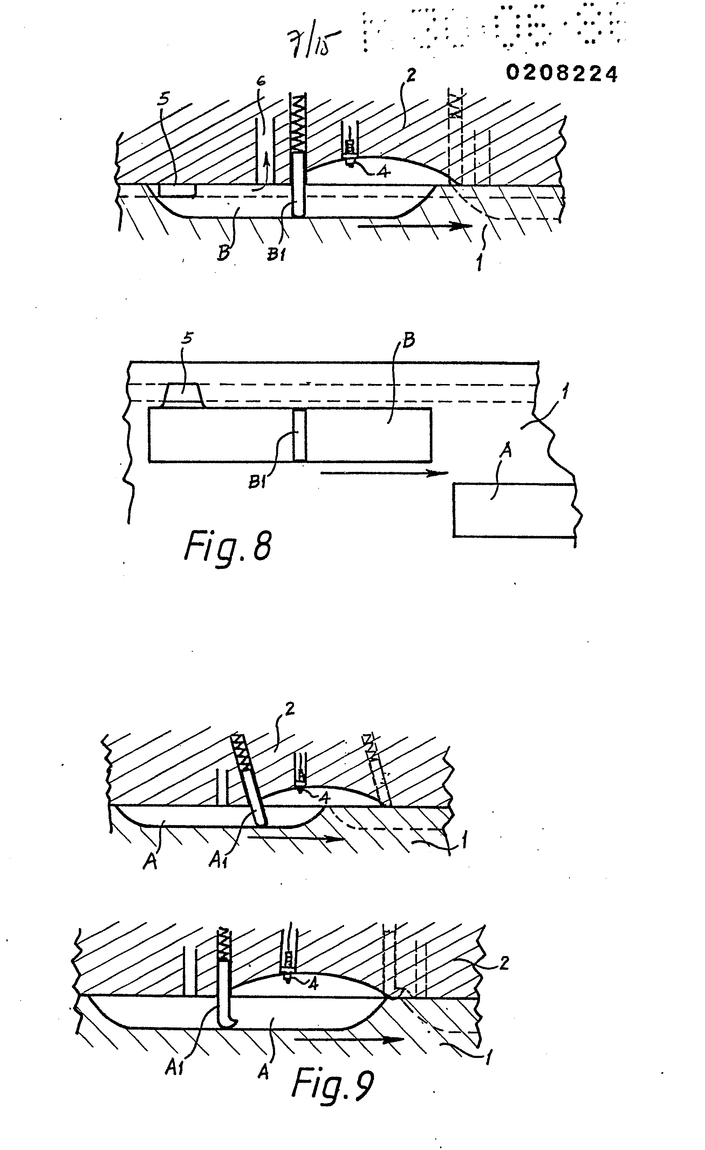

Further, exhausting of the exhaust gases can be carried out by another method of direct exhausting in next cycle; the structure arrangement for this method is shown in Fig. 8. At the trailing end of the explosion and exhaust cylinder (B), and at an angle to the direction motion a laterally extending slot (5) is provided. On the opposed sliding surface, an exhaust passage (6) is provided on the corresponding line of motion of the slot (5). During the final phase of explosion stroke, the engine is connected to said laterally extended slot (5) to exhaust the waste gas.

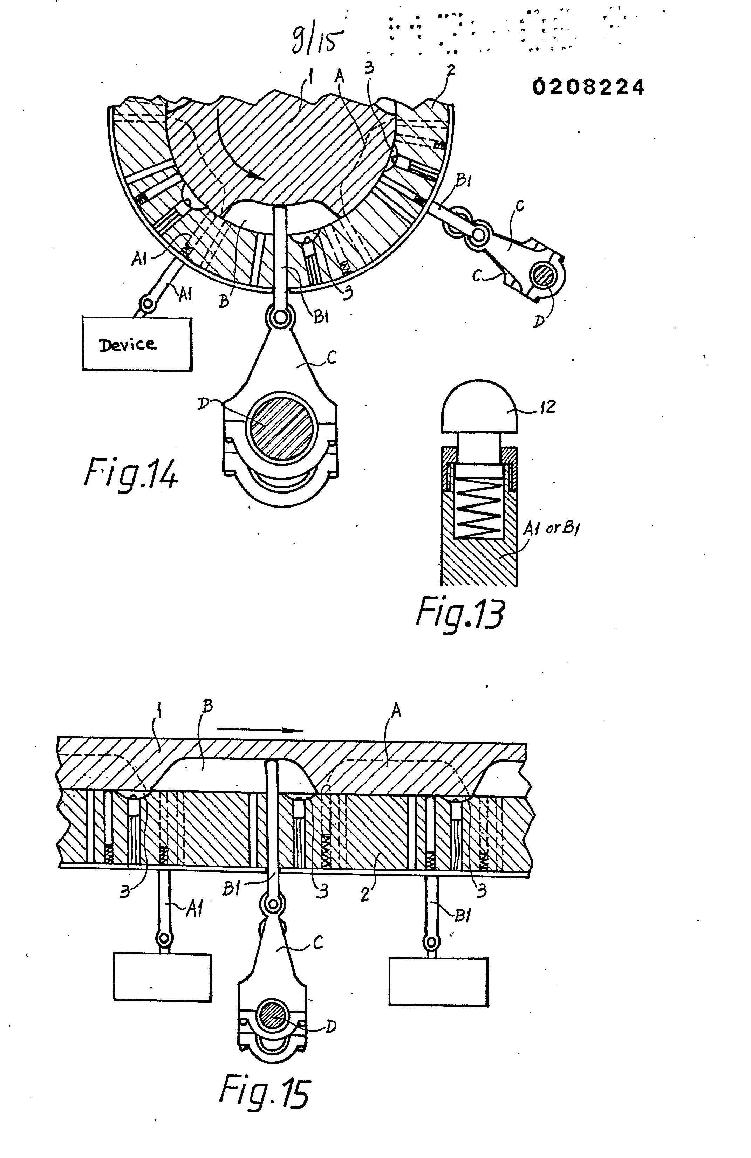

The movable valve (B1) of the engine of this invention may be of one-piece construction, or it may be provided with a spring-loaded head piece (12) of suitable friction resistant metal or alloy for contact with the cylinder walls, as shown in Fig. 13. Alternatively the head of the valve may be enlarged to present an arcuate face to the wall of the cylinder (A) (B) as shown in Fig. 9. Also as shown in Fig. 9 the line of movement of the valve may be normal to, or inclined to, the line of movement of part (1).

The movable valve (A1) may be arranged near the air exchanging chamber (3) as shown in Fig. 8 and 9. The movable valve (A1) may be installed at the leading side of the air exchanging chamber (3) with respect to the direction of movement of part (1) and on the compression cylinder (A) so as to have the gas fuel or the compressed air in cylinder (A) completely (100%) compressed into the cylinder (B) of the air exchanging chamber (3) upon movement of the sliding part (1). The movable valve (B1) may be installed near the leading side of the air exchanging chamber (3).

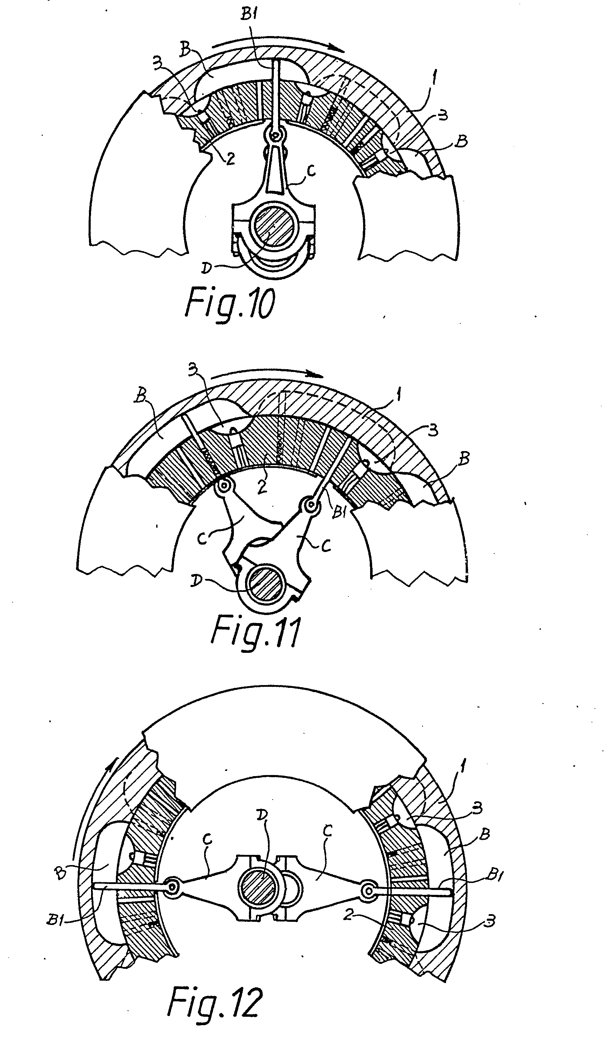

The dynamic output of this invention may be transmitted by means of the movable valve (A1) or (B1) pivotally connected to the connecting rod(C), and then by means of the cylinder set (A) (B) arranged in a selected phase relation to generate an Otto cycle for driving a crank (D) to provide conventional dynamic output. The outer ring may be a sliding part (1), and the inner ring may be a fixed part (2). By means of a suitable number of cylinder sets (A) (B) arranged in a slected phase relation, the dynamic output movable valves (A1) (B1) may be arranged in a vertical type, a "V"-shaped type, or lateral type to drive the crank (D) through connecting rods (C) as shown in Fig. 10, 11, and 12. Said inner ring may be a sliding part (1), and said outer ring may be a fixed part (2). The cylinder sets (A) (B) may be arranged in a selected phase relation to have the movable valves (A1) (B1) of each cylinder set in a vertical type arrangement so as to drive one or more sets of cranks (D) in different phase arrangement for a multi-shaft dynamic output as shown in Fig. 14.

Further, referring to Fig. 15, in a linear type engine of this invention in which a sliding part (1), is driven, the movable valves (A1) (B1) reciprocatingly sliding inside the fixed part (2) may directly or indirectly drive and control other auxiliary means.

In the aforesaid means that uses said movable valve (A1) (B1) as a driving media, a sliding packing or head-piece (12) loaded by a spring (13), or other packing piece, may be used for keeping said movable valves (A1) (B1) and the cylinder bottom in close contact with each other during sliding so as to make sure the gas is being effectively compressed as shown in Fig. 13.

In a conventional engine, advancement of ignition during high speed running is done by means of centrifugal block and vacuum advance mechanisms.

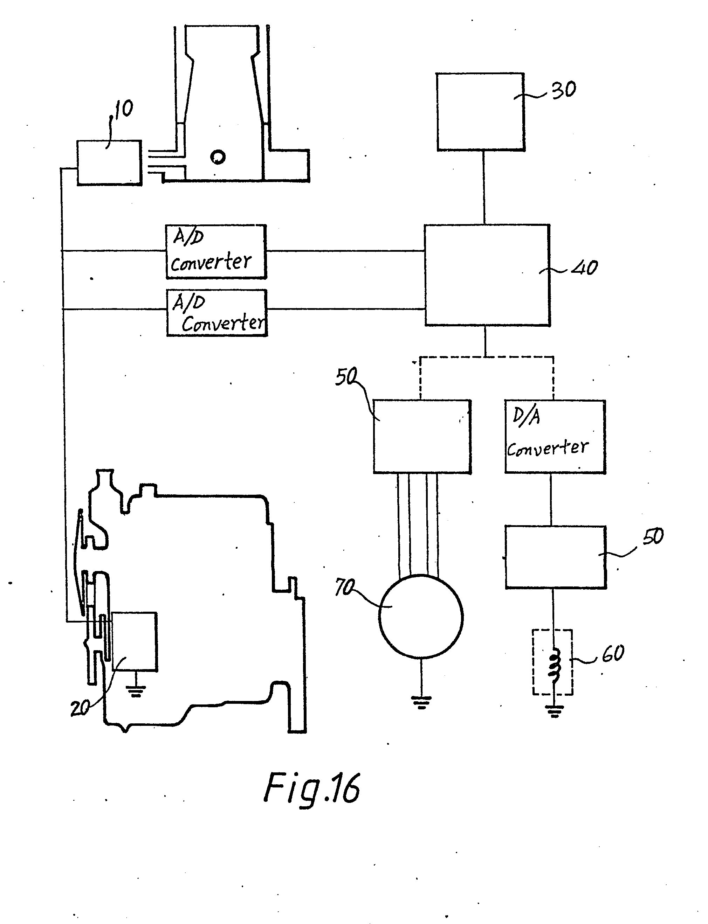

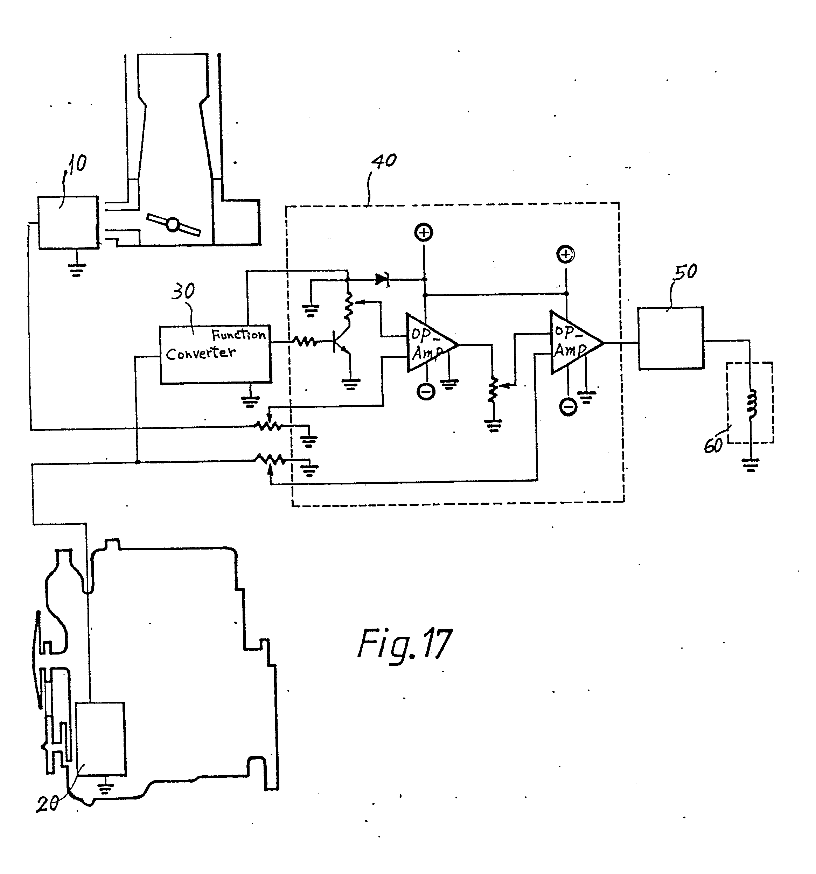

However, when engine speed is increased, the frequency of ignition and explosion is increased in a functional diagram manner, while the advanced ignition effect is increased in linear nature, i.e. the ignition means is unable to correctly match the higher explosion frequency. As a result, the maximum running speed of a conventional engine is liable to be limited by the drift effect of the ignition means, and therefore its efficiency is lowered. The servo-driven adjustment advanced ignition means in this invention can reduce this disadvantage of the known centrifugal block and vacuum advance mechanisms by perfectly compensating and matching the linear variation of advancement of ignition in the engine. The structure of said new ignition means is shown in Figs. 16 and 17, in which:

(a) The sensing means (14) at the intake is a known means that can convert the vacuum into a corresponding analog signal or digital signal.

(b) The engine speed sensing means (15) is a known means that can convert the rotational speed into an analog or digital signal.

(c) Storage means (16) stores the best correction values; it contains the best ignition advance data required by the engine stored in analog or digital form.

(d) Processing control means (17) is an analog comparator circuit or a digital CPU, which, when fed with the inputs from said sensing means (14) of intake vacuum and said engine speed sensing means (15), and by reference to the best data from the storage means (16) of the best correction value can generate a servo-driving signal.

(e)    Driving circuit (18) is an analog amplifier circuit which, by means of the driving signal of said processing control means, generates a corresponding voltage or current output, or a circuit (19) which can convert the digital pulse signal of said processing control means into a direction or quantity driving signal to a stepper motor.

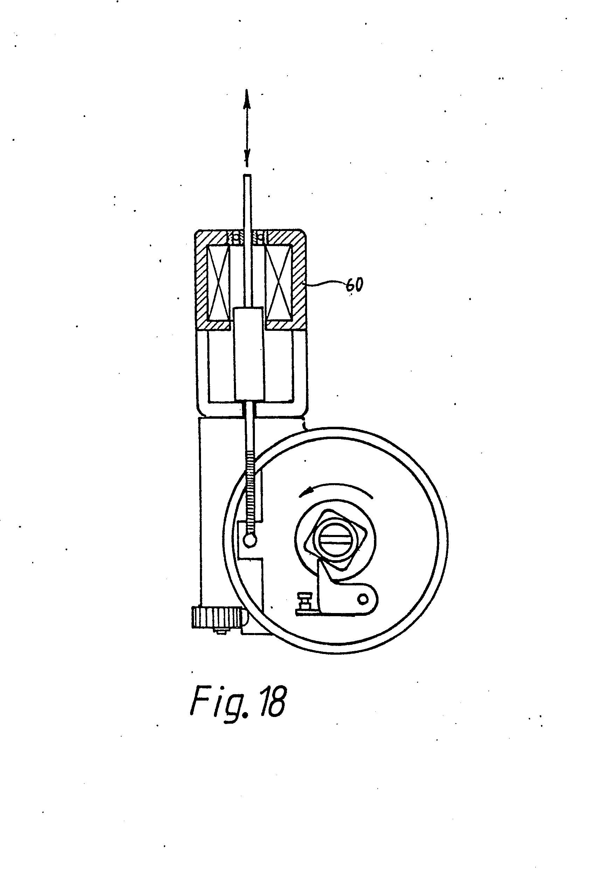

(f)    An analog type of servo-driving adjustment of ignition advance means is a linear solenoid (20) with return spring which can be driven with the analog signal of said driving circuit (18) so as to pull the movable part of the contact point seat (21) for adjusting the ignition time as shown in Fig. 18; the adjustment may also be done by means of a rotary solenoid with return spring being directly coupled to the movable contact point seat, or by means of a driving means being coupled to the movable contact point seat to receive the driving output from the aforesaid driving circuit.

(g)    A stepper type of servo-driving adjustment advanced ignition means:  The ignition time may be adjusted by means of a stepper motor (22) directly coupled to the movable contact point seat (23), or by means of a transmission means coupling (24) to the movable contact point as shown in Fig. (19) so as to be driven by the drive circuit.

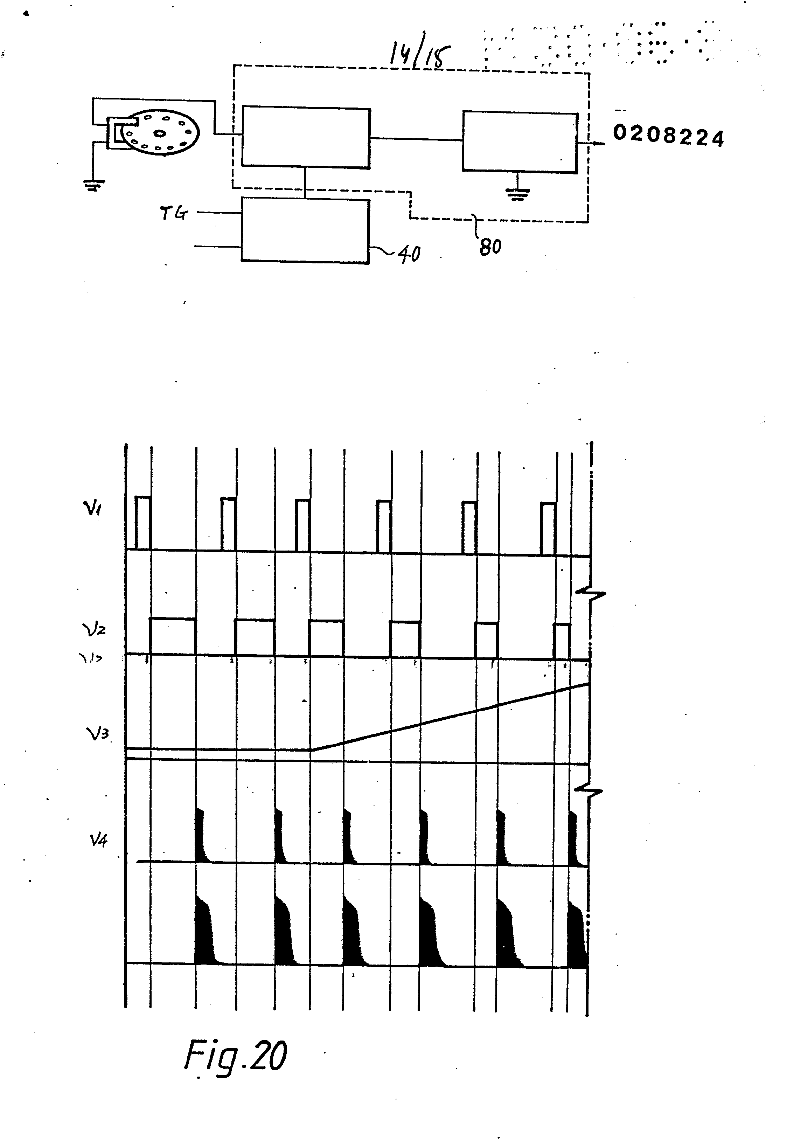

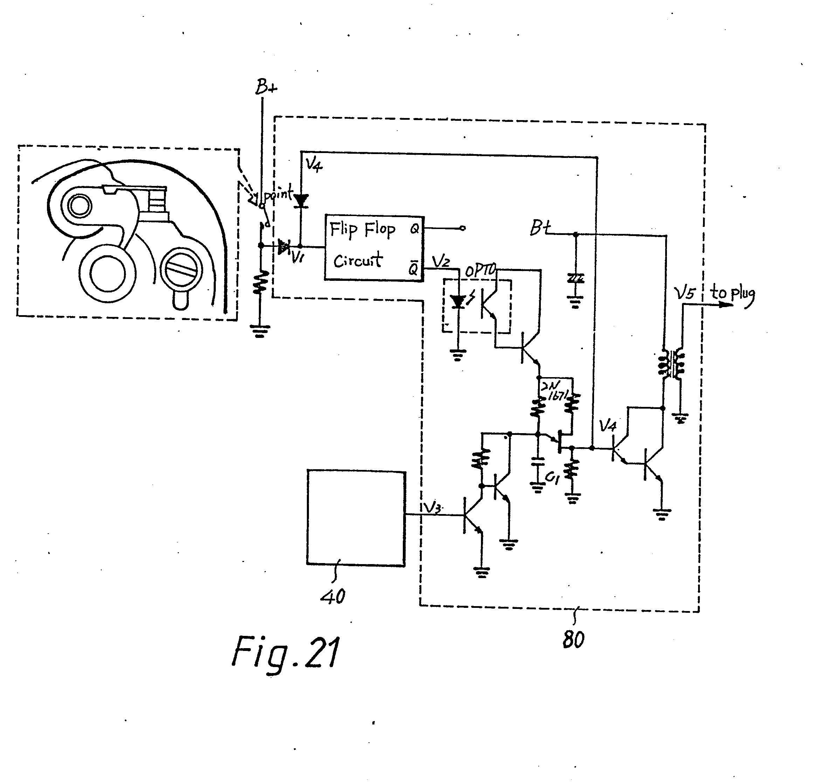

(h)    A solid state time-delay type of ignition advance means uses an electronic ignition means, of which the timing ignition reference circuit is furnished by the aforesaid analog or digital signal circuit so as to timely vary the input time of the ignition instruction signal for changing the ignition output time as shown in Fig. 20.  In Fig. (20) the ignition instruction input means is a photocell or an inductive non-contact type (25), or electric mechanical contact type ignition means being in synchronization with the engine; said ignition means can provide an ignition signal being slightly earlier than the timing ignition to be delivered into a controllable timedelay circuit (26) to trigger said solid state ignition means (27).  Said controllable time-delay circuit is an analog comparator delay circuit made of a known linear IC and a time-delay circuit, or may be a digital circuit comprising a micro-computer; said circuit not only can receive the timing ignition signal, but also can receive the analog or digital signal from the aforesaid processing control means (4).  Upon the advanced ignition signal from (4) being delivered to the aforesaid time-delay circuit, the operation of said circuit is to shorten the delay time as shown in Fig. 21.

In Fig. 17 the output signals from the sensing means 14 and 15 are fed into a function generator 40 to produce a final output signal to control ignition timing.

By means of the circuit shown by way of example in Fig.17, signals (a) and (b) from sensing means 14 and 15 respectively are converted into a final signal represented by the formula

$$k_3 \left[ k_1 f(b) + k_2 a \right] + k_4 b$$

where $k_1$, $k_2$, and $k_3$ are constants and f is a function determined by the electrical characteristics of the circuit.

- 1 -                                    0208224

CLAIMS:

1. An ignition controlling means for a linear or rotary engine comprising:

means to sense the vacuum in the engine intake and convert the so-sensed value of vacuum into a corresponding analog or digital signal;

means to sense the engine speed and convert the so-sensed value of engine speed into a corresponding analog or digital signal;

means for storing ignition timing correction values; and

means for comparing the vacuum and speed signals with the stored correction values and generating a servo-driving signal for adjustment of the ignition timing of the engine.

2. An ignition controlling means as claimed in Claim 1 in which the servo-driving signal operates a stepper motor or a solenoid coupled to a movable contact point seat in an ignition circuit.

3. An ignition controlling means as claimed in Claim 1 in which the driving signal is fed into an electronic time-delay control circuit to control the delay applied to an ignition signal.

4. An ignition controlling means according to any preceding claim including:

an analog or digital storage means for storing a correction value of ignition data required to control the engine;

a processing control means including an analog comparator circuit or a digital CPU which, by means of the inputs from the so-sensed vacuum and engine speed signals serves in conjunction with the storage means, to produce a correction value and generate a servo-driving signal;

a driving circuit including an analog amplifier circuit and cam, drivable according to the driving signal of said processing control means and to generate a corresponding voltage or current output, or convert the digital pulse signal of the processing control means into a direction or quantity driving signal to the stepper motor;

an analog servo-driving adjustment advanced ignition means, including a solenoid drivable according to the analog signal of said driving circuit so as to displace the movable part of the solenoid contact for adjusting the ignition time; and

a stepper-type of servo-driving adjustment advanced ignition means in which the ignition time is adjustable by means of a stepper motor which is directly coupled to the solenoid.

5. An ignition controlling means according to Claim 4 wherein the solenoid is a linear or a rotary solenoid.

6. A solid state time-delay type of ignition advance means, including an electronic ignition means, wherein the timing ignition reference circuit thereof is the aforesaid analog or digital signal circuit of Claim 9, 10 or 11 so as to vary the input time of the ignition instruction signal for changing the ignition output time; the said ignition means including a photo cell, an inductive non-contact type, or electric-mechanical contact type ignition means in synchronism with the engine, and serves to provide an ignition signal slightly earlier than the timing ignition to be delivered into a controllable time-delay circuit to trigger the solid state ignition means; the controllable time-delay circuit including an analog comparator delay circuit or a digital circuit of a micro-computer and wherein the said circuit is adapted selectively to receive the timing ignition signal or the analog or digital signal from the aforesaid processing control means so as to shorten the delay time upon the advanced ignition input signal coming and to provide timely ignition.

7. An ignition advancing means for a linear or rotary engine comprising:

means to sense the vacuum in the engine intake and convert the value into a corresponding analog or digital signal;

means to sense the engine speed and convert the value into a corresponding analog or digital signal;

means for generating a signal which is a function of the above two variable signals, the nature of the function being determined by selection of the electrical characteristics of the function generator; and

means for applying the resulting signal to adjust the ignition timing.

0208224

Fig. 1

Fig.1-1

3/15    0208224

**Fig.2**

**Fig.3**

0208224

Fig. 4

0208224

## Fig.5

## Fig.6

Fig.7

0208224

**Fig. 8**

**Fig. 9**

0208224

Fig.10

Fig.11

Fig.12

0208224

Fig.14

Device

Fig.13

12

A1 or B1

Fig.15

0208224

Fig.16

Fig.17

Fig. 18

13/15

0208224

70

Fig.19

0208224

Fig.20

Fig.21